# EUROPEAN PATENT SPECIFICATION

(11) **EP 0 874 234 B1**
(45) Date of publication and mention of the grant of the patent: **23.01.2002**
(21) Application number: 98303117.0
(22) Date of filing: 22.04.1998
(51) Int. Cl.: G01N 21/64, B21B 45/02

(54) **The use of fluorescence for monitoring concentrations of metalworking fluids for non-ferrous and ferrous metals**
Verwendung von Fluoreszenz zur Überwachung von Konzentrationen von Metallbearbeitungsflüssigkeiten für Eisen- und Nichteisenmetalle
Utilisation de fluorescence pour surveiller les concentrations de fluides pour usinage de métaux ferreux et non ferreux

(30) Priority: 24.04.1997 US 847570
(43) Date of publication of application: 28.10.1998
(73) Proprietor: NALCO CHEMICAL COMPANY, Naperville Illinois 60563-1198 (US)
(72) Inventor: Trivett, Robert L., Aurora, Illinois 60504 (US)
(74) Representative: Harrison, David Christopher

(56) References cited:
- EP-A- 0 362 435
- EP-A- 0 543 057
- GB-A- 1 191 476
- GB-A- 2 151 526
- US-A- 5 191 803
- US-A- 5 225 675
- PATENT ABSTRACTS OF JAPAN vol. 008, no. 030 (C-209), 8 February 1984 & JP 58 193723 A (TOYOTA JIDOSHA KOGYO KK;OTHERS: 01), 11 November 1983,

## Description

This invention is directed to a method for the determination of the concentration of one or more active components of a metalworking fluid. The invention may also be utilized to accurately control the amount of one or more active components that are added to a metalworking fluid formulation or the entire metalworking fluid formulation itself.

Metalworking fluids are utilized to provide lubrication and cooling to the tooling and a metal workpiece undergoing a metal finishing or forming operation. These finishing or forming operations can include grinding, drilling, tapping, reaming, sawing, facing, turning, broaching, milling, planing, shaping, undercutting, stamping, drawing and honing. These operations may be performed on a number of ferrous alloys and non-ferrous alloys. Ferrous alloys typically finished or formed using metalworking fluids include but are not limited to cast iron, stainless steel, chrome steel, galvanized steel, alloys therof and the like. Non-ferrous alloys typically finished or formed using metalworking fluids include but are not limited to aluminum, brass, copper, and bronze and alloys thereof.

Metalworking fluids employed in these forming and finishing operations are generally utilized as synthetic, semi-synthetic, soluble oil or straight oil metalworking fluids metalworking fluids. In some circumstances, combinations of synthetic, semi-synthetic, soluble oil or straight oils may be used. Synthetic fluids can be utilized as either true solutions or emulsions depending upon product chemistry. Synthetics are completely free of petroleum hydrocarbon oils. Semi-synthetics generally contain up to 25% petroleum hydrocarbon oil blended with emulsifiers, corrosion inhibitors, lubricants and other additives in addition to water. The semi-synthetic is generally utilized as an oil-in-water emulsion which can vary widely in particle size. Soluble oils are blends of up to 80% petroleum hydrocarbon oils, emulsifiers, lubricant additives, and corrosion inhibitors. Soluble oils usually contain only low levels of water, less than 1%. They are also utilized as oil-in-water emulsions which are often of a particle size greater that 15 to 20 microns. Straight oils are blends of petroleum hydrocarbon oils and lubricant additives. They are always utilized straight as is, never diluted with water. It is beyond the scope and intent of this application to describe the formulations of metalworking fluid formulations other than to describe the four major classes of fluids which shall be referred to in the body of the application.

These fluids generally start as clear, translucent fluids which are mixed with water to form the metalworking fluid oil-in-water emulsion or true solution. While starting clear, the fluids soon start to discolor during the severe conditions under which they are employed. In addition, the fluids pick up so called tramp oils from the oils utilized to lubricate machinery, act as rust and corrosion preservatives on starting and finished stock, and in addition, utilizing water from various sources used to clean work areas, hold down dust, and the like. In addition the oil-in-water emulsion or true solution metalworking fluids pick up metal fines, dirt, metal oxides and the like (swarf) and other contaminants which they are exposed to. The resulting metalworking fluid usually becomes opaque, dark, and of uncertain composition dependent upon the type, level and distribution of contaminants.

Because the metalworking fluid must be utilized for as long a period of time as possible to insure the recovery of the investment made in the fluid, and to minimize downtime, various methods have been utilized to measure the amount of active components in the metalworking fluid to ensure that the fluid is exhibiting the proper cooling lubrication and other performance parameters. Among the methods that have been used to determine the active concentrations of the metalworking coolant include refractive index, emulsion solids, emulsion splits, various colorometric test methods, and Brix solids level via refractometers. One of the problems with all of these methods is that they can not be run on line, and depending on the composition of tramp oils, and other contaminants, the amount of hardness in the water being utilized, the color composition of impurities finding their way into the metalworking fluid, may all produce inaccurate results and masks the ability of these tests to accurately monitor the concentration of one or all of the active components.

European Patent Application EP 0 543 057 A1 to Quaker Chemical Corporation discloses a method for the colorometric determination of the active concentration in oil-in-water emulsions of metalworking fluids. In this method, an indicator dye is added to the oil phase of the oil-in-water emulsion prior to its use. Subsequently, the oil concentration is determined after, or during use spectrophotometrically. The indicators utilized by the patentee are acid/base indicators and fluorescent indicators. These materials are generally used, according to the patentee in the range of 10-500 ppm of indicator based on the oil in the oil-in-water emulsion. In the method proposed by Quaker, an indicator is selected which is colorless under the performance characteristics of the oil-in-water emulsion. The patentee states however that prior to utilizing the UV/VIS spectrophotometer, it may be necessary to make the emulsion transparent, normally by the addition of a solubilzer to the sample of the emulsion. Solubilizers may include those materials which, in the case of acid/base indicators are pH adjustment materials which, if you will develop the color of the indicator. An example presented in the Quaker application is the use of phenolphthalein which is utilized at a level of about 100 ppm in the formulation. Example 1 states that it was necessary to use a solubilizer mixture of tall oil, fatty acids, monoethanol amine, diethanol amine, a fatty alcohol, and isopropyl alcohol to the sample prior to spectrophotometric analysis. This solubilizer raised the pH of the emulsion to 10.5. allowing for the development of the phenolphthalein's bright purple color. Fines were removed by filtration. In Example 2 of the same reference, a fluorescent indicator was utilized. In this case a colorless fluorescent indicator was utilized. Prior to analysis, the solubilizer used for the acid/base indicator example was added, and concentration was determined. While this method is an improvement over the existing art, it is not continuous, leaves a wide margin of error because of the addition of other materials to each sample, and can not continuously control, or monitor the composition the actives of the oil-in-water metalworking fluid.

It is an object of this invention to provide to the art a method for the continuous determination of metalworking actives in a metalworking system. It is a further object of this invention to provide to the art a novel, accurate method for the determination of metalworking actives in a metalworking fluid system. Other objects will appear hereinafter.

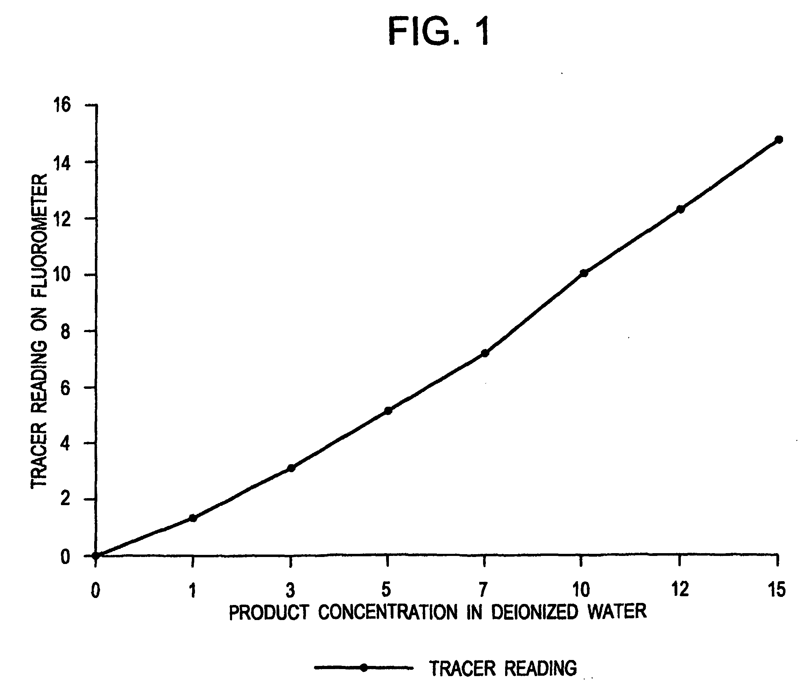

Fig. 1-Fig. 4 are graphs showing fluorescence emission concentration over product concentration in various metalworking fluid systems. The Figs will be explained in more detail in the Examples.

The invention provides a method for the continuous determination of the active compositions of a metalworking fluid through the use of fluorescent emission spectrophotometry. Through this method, a side stream of the metalworking fluid emulsion or true solution may be continuously monitored to determine active concentration. The fluorometer may include feed back controls designed to increase or decrease the flow of metalworking fluid actives into the metalworking systems. The invention further provides a method for the determination of the active metalworking fluid components in a metalworking system by the following process:
a. adding from 10-500 ppm (1-50ppm at diluted use concentrations in the metal working system) of a metalworking fluid soluble tracer material to a sample of the metalworking fluid, said tracer having a fluorescent emission at a selected wavelength within the range of 300 to 600nm, said tracer being substantially inert in the metalworking system;
b. establishing a calibration curve of fluorescence emission at the selected wavelength vs, metalworking fluid concentration, including at least one point in said curve at or near the desired concentration of the metal working fluid in the system;
c. continually monitoring the fluorescent emission characteristics of the tracer at the selected wavelength and determining the concentration of the metalworking fluid in the system;
d. continually adding metalworking fluid containing said tracer in response to a concentration below the desired level in the system, and continually discontinuing the feed of metalworking fluid in response to a concentration above the desired level in the system. Such tracer may be added of a specific wavelength and dosage such that the tracer is unaffected by the normal background fluorescence exhibited by petroleum hydrocarbon oils, and other components of the metalworking fluid formulation or by the normal background fluorescence exhibited by contaminants that enter the metalworking fluid system. The background fluorescence of the process water and the possible contaminants such as tramp oils may be determined by routine scans on the UV/VIS spectrum prior to the selection of the tracer and determination of proper dosage for said tracer.

The metalworking fluid so treated with the tracer material may be the active in an oil-in-water emulsion or true solution of the metalworking fluid. Typical use concentrations of the metalworking fluid in the emulsion or the true solution thereof range from as low as 0.1% to as high as 40% by weight, although it is more common for concentration of the metalworking fluid to range from 0.5 - 15% by weight. It will be seen that due to the low amounts of tracer utilized, the concentration of tracer in the actual metalworking emulsion is very low. While this method describes the utilization of a single tracer material for the metalworking fluid, it is possible, and sometimes desirable to utilize more than one tracer material in the system. In this mode of practicing the invention it is possible to trace at least two actives in the metalworking fluid utilizing at least two different tracer materials.

The use of fluorescence in water treatment systems is discussed in U.S. Patents 4,783,314 and 4,992,380 to Hoots et al. In Hoots, a substantially inert water soluble fluorescent tracer material is added to a water treatment active system, a calibration curve is obtained, and, the concentration of water treatment active is adjusted in accordance with the fluorescent emission from the tracer material. Hoots however is directed to a homogeneous aqueous system which may contain some level of solids, but is generally not designed not to contain large amounts of oil, or a two phase system. I have found surprisingly that fluorescent emission spectroscopy can be used directly on metalworking fluids without solubilizing or otherwise treating the emulsion prior to measurement. By the use of this method, a side stream or the like of the oil-in-water metalworking emulsion or true solutions can be continuously passed through a fluorometer to accurately determine the concentration of fluorescent tracer added to the system.

The resultant value of the fluorescence can be utilized to control the continually monitoring the fluorescent emission characteristics of the tracer at the selected emission wavelength and determining the concentration of the metalworking fluid in the system. The information determined from the tracer can be used to turn on and off a pump, continually maintaining the concentration of an active in the metalworking fluid within a set desired range. by continually adding metalworking fluid, or active thereof containing said tracer in response to a concentration below the desired level in the system, and continually discontinuing the feed of metalworking fluid in response to a concentration above the desired level in the system. The information from the tracer measurement may also be useful in determining the existence of leakage of water or oil into the system, or of leakage of metalworking fluid out of the system.

The tracer selected for use is desirably substantially non reactive in the metalworking environment to which it is subjected. During metalworking operations of the type envisioned hereunder, temperatures of from ambient to 200 °F are typically encountered. The tracer selected is desirably stable through this temperature range. Likewise, the tracer is preferably selected such that it does not degrade at the pH values of the aqueous phase of the oil-in-water emulsion or true solution. Such pH range typically can vary anywhere from 8.0 to 11.0 for typical diluted metalworking formulations utilized in the field. Lastly, it is desirable that the tracer gives a strong fluorescent emission at a known wavelength which is selected to be different than the wavelength at which typical contaminants would be fluorescent. Such contaminants including hydraulic oils based upon petroleum hydrocarbon oil, metallic fines (swarf) and mixtures thereof. The wavelength of the tracer at which this strong fluorescent emission occurs is preferably also selective difference so that it is unaffected by background fluorescence of the process water and all components of the metalworking fluid itself. In addition, it is desirable that there is no inhibition of the excitation wavelength at which the tracer is initially excited prior to fluorescence at the higher emission wavelength. In selecting tracers for use in this process certain materials used by Hoots et al. were originally tested. These tracers however while stable in aqueous water treatment systems, were found not to be entirely stable in metalworking systems. It is known that the presence of alkaline functionality on certain of the metalworking fluid components contained in the metalworking fluid concentrate led to a reaction with these known tracers, causing their disassociation and subsequently destroying their ability to be fluorescent at known wavelengths in response to excitation at known wavelengths. I accordingly set out to find suitable tracers for use in this invention. Because of the nature of the process contemplated herein it was determined that the tracer to be utilized must be soluble in the metalworking concentrate that is to be monitored.

The fluorescent tracer materials of the subject invention may be visible or non-visible in the application proposed. Further, I have found that suitable tracer materials generally are excited over the wave length range of from 450-490 nm and emit over a range of from about 500- 550 nm. In general, the selection of a particular wavelength for excitation or for reading emission is done on a trial and error basis for each particular tracer utilized. Moving the frequency of excitation, or reading the emission wavelength even a few nanometers may have a profound effect on the ability of the tracer to function. While visible tracer materials are not generally favored in industrial water applications where fluorescent tracer materials are employed, the metalworking compounds of the instant invention as stated above may be clear or colored because of the opaque nature of most metalworking fluids. Further, at the appropriate use levels indicated, the contribution to color by the fluorescent tracer materials will often be negligible compared to the color of the other components of the metalworking compound.

Many tracers for use in the invention were evaluated. Some tracers were rejected because of their thermal instability, the fact that certain tracers disassociated at the pH values of the metalworking fluids, or the fact that they precipitated in the presence of metalworking compounds contained in the metalworking fluids. Other tracers were rejected because they did not provide a linear relationship between concentration and fluorescence at the wavelengths studied.

Among the most useful of the tracers investigated, and those that are preferred for use in the subject invention are:
1. Keystone Fluorescent Yellow 131SC available from the Keystone Aniline Corporation, Chicago, Illinois (color index number: solvent red 175, reportedly a dye in the perylene family);
2. Keystone AA225, available from the Keystone Aniline Corporation (color index number: acid yellow 250, a dye reportedly in the cumarin family); and,
3. Day-Glo Grand Yellow 10GFF, available from the Day-Glo Color Corporation, Cleveland, Ohio. (color index number: acid yellow 239, reportedly in the cumarin family).

These materials are all commercially available. Because of the nature of the metalworking emulsion or the solution to be evaluated, and the availability of a fluorometer and sample cell useful in the Hoots, et. al. invention previous cited above, was utilized. It was determined that while the fluorometer was useful, because of the opaque nature of the metalworking emulsion in use that a shorter sample path (light path) was more useful. Further, because of the nature of the metalworking fluid it was determined that the plastic composition of the sample path of a fluorometer used for the determination of water treatment actives was unsuitable for use with metalworking fluids, and a new sample path device had to be constructed out of materials which were stable to the metalworking fluid. The fluorometers useful in the determination of actives in metalworking fluids are commercially available. I have found that fluorometers purchased from the Turner Designs, Inc. of Sunnyvale, California are particularly useful and this brand of fluorometer was used in the experiments below. The Turner Fluorometers are available with circuitry and control logic to start a metalworking fluid pump upon reaching a lower fluorescent limit, and deactivating the pump at an upper fluorescent limit. The fluorometer may also be programmed to sound alarms under certain conditions.

By regulating the amount of fluorescent tracer added to the metalworking fluid concentrate, calibrating a fluorometer to the desired concentration of metalworking concentrate in an oil-in-water or true solution emulsion metalworking fluid, careful, and exact control of the metalworking system can be achieved.

By way of illustration, the following examples were conducted.

### Example 1

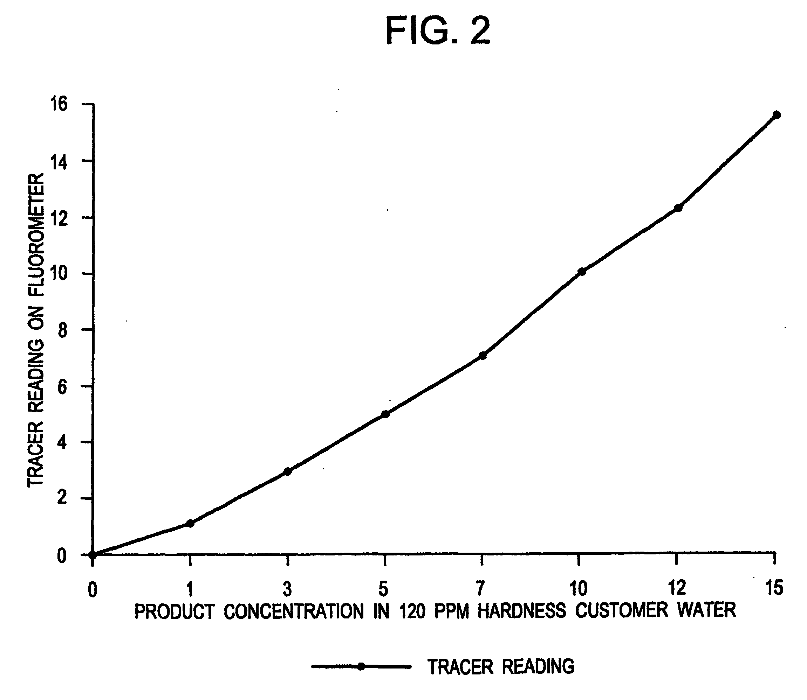

A semi-synthetic metalworking fluid being used in the machining and grinding of ferrous alloys was evaluated at a midwest auto parts manufacturer. To the semi-synthetic fluid was added 200 ppm of tracer. This semi-synthetic fluid, Nalco 26580, available from Nalco Chemical Company, Naperville, Illinois was utilized to make-up a metalworking emulsion containing 8% by weight of the fluid (16 ppm of the tracer). The water used to make-up the emulsion contained 50 ppm of hardness. The fluorescence of the dye contained in the semi-synthetic was calibrated under use conditions. Excellent correlation was obtained between fluorescent measurement and conventional laboratory methods. In order to determine the effect of tramp oils on the nature of the measurement, and to observe the aging of the fluid, the emulsion containing the fluid was run for 15 days. Through the first eight days, the values obtained using fluorescence correlated well with laboratory analysis. On Day 9, and for two additional days, hydraulic oil (tramp oil) was added at a level of 3% by weight of the emulsion. Emulsion particle size increased from 12.5 microns to 17.5 microns on the average (1 micron = 10⁻⁶ m). The resulting fluorescent values decreased from 3.6 (before tramp oil addition) to only 3.0. The incorporation of up to 1000 ppm of metal fines had an even more dramatic effect on the fluorescent readings, causing fluorometer readings to drop to 2.3. Based on this work, it was apparent that the dye utilized was not substantially non-reactive, or stable in the system. This work led to the evaluation of Keystone Fluorescent Yellow 131SC. This totally oil soluble dye absorbs at a level of 494-525nm and fluoresces at 535nm. A metalworking fluid incorporating 200 ppm of this tracer (100 ppm as Fluorescent molecule) was evaluated. The fluorescence of this dye in the system was found to be linear at concentrations of the fluid up to 12% by weight in the emulsion using both deionized and untreated city water (see Fig. 1 and Fig 2). It was further found that the dye exhibited stable fluorescence through 100 ppm of total hardness water with total water hardness of 200-250ppm necessary to elicit significant variations in fluorometer values. A metalworking fluid employing the Keystone Fluorescent Yellow 131SC was prepared and evaluated over a 14 day period. Through the first eight days of running the fluorescence values was well as emulsion particle size remained stable. On day 9, hydraulic (tramp) oil was added at a level of 3%. Emulsion particle size remained relatively constant at around 16 microns. The fluorescence of the emulsion increased by an approximate concentration value of 1.0% corresponding to the initial addition of 1% hydraulic oil. Beyond that point, concentration values remained stable from 12.0-12.5% despite the addition of hydraulic oil up to a level of 3.0%. The incorporation of swarf (metal fines) up to a level of 1000 ppm had no impact upon fluorometer readings. A linear correlation thus existed between product concentration and tracer dye level in both deionized water and untreated city water at product concentrations up to 12%, utilizing a wavelength of 486 nm and an emission wavelength of 540 nm.

### Example 2

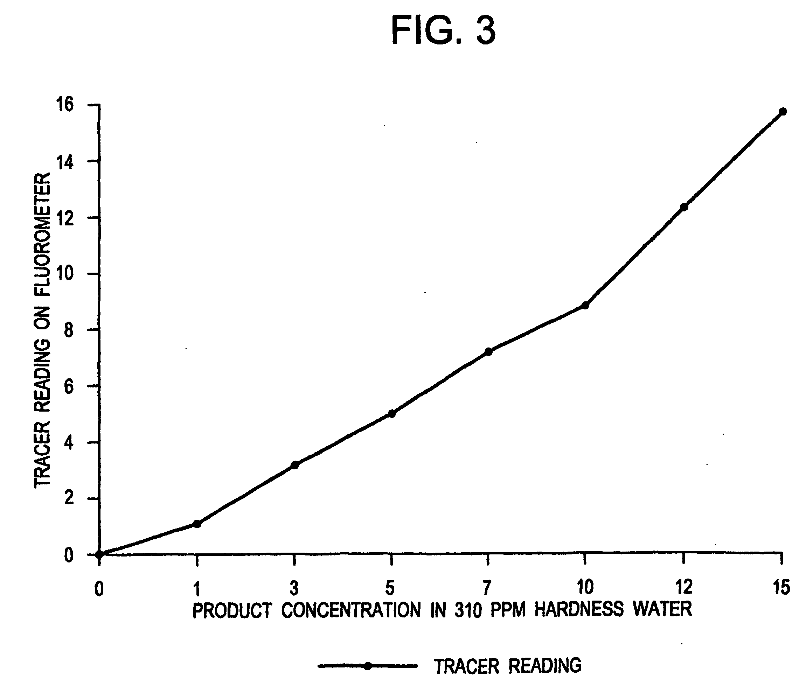

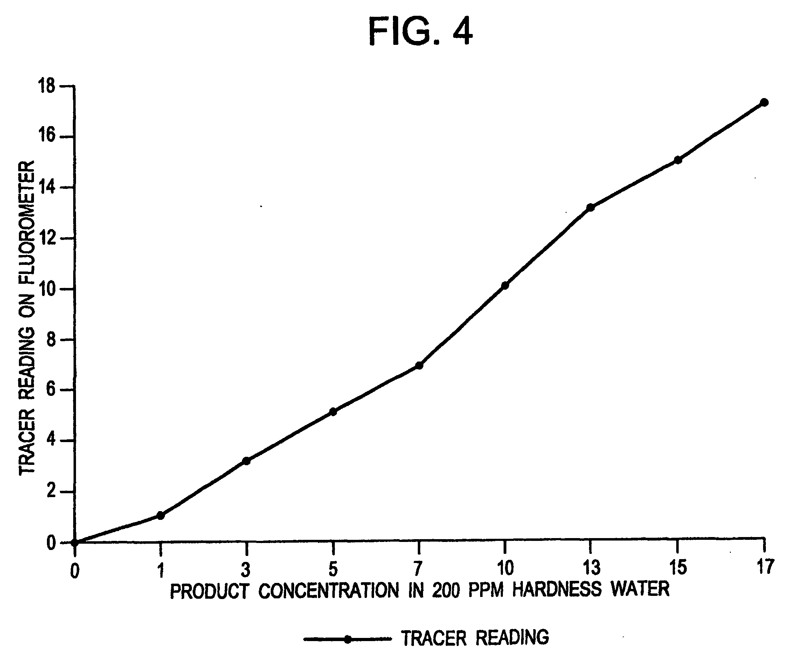

Experiments were conducted to determine the linearity of certain fluorescent materials in metalworking fluids. Fig 3 is a graph showing the fluorescence level of Keystone 10G FF added at a level of at 100 ppm of dye in a commercially available semi-synthetic metalworking fluid against percent product concentration in a customer water containing about 310 ppm hardness. Fig. 4 is a graph showing the fluorescence level of Keystone Yellow 131SC added at a level of 100 ppm of tracer in a commercially available semi-synthetic metalworking fluid against percent product concentration in a customer water containing about 200 ppm hardness.

The above experiments show that the tracer materials of the instant invention fluoresce over a linear range, and are thus applicable for use in determining the concentration of actives in a metal working fluid. By the proper selection of tracer material, one that is substantially inert to the metal working system control of metal working processes not obtainable heretofore can be achieved.

## Claims

1. A method for controlling the concentration of a metalworking fluid being used in a metalworking system which comprises:
a. adding from 10-500 ppm of a metalworking fluid soluble tracer material to a sample of the metalworking fluid, said tracer having a fluorescent emission at a selected wavelength within the range of 300 to 600 nanometers, said tracer being substantially inert in the metalworking system;
b. establishing a calibration curve of fluorescence emission at the selected wavelength at least two different concentrations of metalworking fluid concentration, including at least one point at or near the desired concentration of the metalworking fluid in the system;
c. continually monitoring the fluorescent emission characteristics of the tracer at the selected emission wavelength and determining the concentration of the metalworking fluid in the system;
d. continually adding metalworking fluid containing said tracer in response to a concentration below the desired level in the system, and continually discontinuing the feed of metalworking fluid in response to a concentration above the desired level in the system.

2. The method of claim 1 wherein the tracer material is water soluble.

3. The method of claim 1 wherein the metalworking fluid is selected from the group consisting of grinding drilling, tapping, reaming, sawing, facing, turning, broaching, milling, planing, shaping undercutting, stamping. drawing and or honing fluid.

4. The method of claim 1 wherein the inert tracer material is a water soluble fluorescent tracer having a uranine base.

5. The method of claim 1 wherein the metalworking fluid contains at least two active components, and a different tracer is added in direct proportion to at least each of two active components of said fluid.

6. The method of claim 1 wherein the fluorescent emission of the tracer material is utilized to control a feed of metalworking fluid additive into the system.

## Patentansprüche

1. Verfahren zur Regulierung der Konzentration eines Metallbearbeitungsfluids, das in einem Metallbearbeitungssystem verwendet wird, welches umfasst:
a) die Zugabe von 10 bis 500 ppm eines im Metallbearbeitungsfluid löslichen Tracermaterials zu einer Probe des Metallbearbeitungsfluids, wobei der Tracer eine Fluoresenzemission bei einer gewählten Wellenlänge innerhalb des Bereichs von 300 bis 600 nm aufweist, wobei der Tracer im Metallbearbeitungssystem im Wesentlichen inert ist;
b) das Erstellen einer Eichkurve der Fluoreszenzemission bei der gewählten Wellenlänge mit zumindest zwei verschiedenen Metallbearbeitungsfluid-Konzentrationen, wobei zumindest ein Punkt bei oder nahe der gewünschten Konzentration des Metallbearbeitungsfluids im System liegt;
c) das kontinuierliche Überwachen der Fluoresenzsemissionseigenschaften des Tracers bei der gewählten Emissionswellenlänge und das Bestimmen der Konzentration des Metallbearbeitungsfluids im System;
d) die kontinuierliche Zufuhr von Metallbearbeitungsfluid, das den Tracer enthält, als Reaktion auf eine Konzentration unterhalb der gewünschten Menge im System und das kontinuierliche Unterbrechen der Zufuhr an Metallbearbeitungsfluid als Reaktion auf eine Konzentration oberhalb der gewünschten Menge im System.

2. Verfahren nach Anspruch 1, worin das Tracermaterial wasserlöslich ist.

3. Verfahren nach Anspruch 1, worin das Metallbearbeitungsfluid aus der aus Schleif-, Bohr-, Gewindeschneid-, Ausbohr-, Säge-, Plandreh-, Dreh-, Räum-, Fräs-, Hobel-, Form-, Unterschneidungs-, Stanz-, Zieh- und/oder Hon-Medium bestehenden Gruppe ausgewählt ist.

4. Verfahren nach Anspruch 1, worin das inerte Tracermaterial ein wasserlöslicher fluoreszierender Tracer auf Uraninbasis ist.

5. Verfahren nach Anspruch 1, worin das Metallbearbeitungsfluid zumindest zwei aktive Komponenten enthält und ein anderer Tracer in direktem Verhältnis zu zumindest jeder der beiden aktiven Komponenten im Medium zugegeben wird.

6. Verfahren nach Anspruch 1, worin die Fluoreszenzemission des Tracermaterials verwendet wird, um eine Zufuhr von Metallbearbeitungsfluid-Additiv in das System zu regulieren.

## Revendications

1. un procédé pour la régulation de la concentration d'un fluide d'usinage utilisé dans un système d'usinage qui comprend les opérations consistant à :
a. ajouter, à un échantillon du fluide d'usinage, de 10 à 500 ppm d'une matière soluble formant traceur du fluide d'usinage, ledit traceur présentant une émission de fluorescence à une longueur d'onde choisie à l'intérieur de la gamme de 300 à 600 nanomètres, ledit traceur étant sensiblement inerte dans le système d'usinage ;
b. établir une courbe d'étalonage de l'émission de fluorescence à la longueur d'onde choisie à au moins deux concentrations différentes de concentration du fluide d'usinage, en incluant au moins un point de la concentration désirée, ou près de la concentration désirée, du fluide d'usinage dans le système ;
c. contrôler de manière continue les caractéristiques d'émission de fluorescence du traceur à la longueur d'onde d'émission choisie et déterminer la concentration du fluide d'usinage dans le système ;
d. ajouter de manière continue du fluide d'usinage contenant ledit traceur en réponse à une concentration en dessous du niveau désiré dans le système, et discontinuer de manière continue l'amenée du fluide d'usinage en réponse à une concentration au dessus du niveau désiré dans le système.

2. Le procédé de la revendication 1, dans lequel la matière du traceur est soluble dans l'eau.

3. Le procédé de la revendication 1, dans lequel le fluide d'usinage est choisi dans le groupe se composant d'un fluide de meulage, de percage, de taraudage, d'alésage, de sciage, de surfacage, de tournage, de mandrinage, de broyage, de rabotage, de mise en forme, d'évidage, d'enboutissage, d'étirage et/ou de rectification.

4. Le procédé de la revendication 1, dans lequel la matière du traceur inerte est un traceur fluorescent soluble dans l'eau présentant une base d'uranine.

5. Le procédé de la revendication 1, dans lequel le fluide d'usinage contient au moins deux composés actifs, et dans lequel un traceur différent est ajouté en proportion directe à au moins chacun des deux composants actifs dudit fluide.

6. Le procédé de la revendication 1, dans lequel l'émission de fluorescence de la matière du traceur est utilisé pour commander une amenée d'additif de fluide d'usinage dans le système.
